# EUROPÄISCHE PATENTSCHRIFT

(11) **EP 0 953 758 B1**
(45) Veröffentlichungstag und Bekanntmachung des Hinweises auf die Patenterteilung: **08.10.2003**
(21) Anmeldenummer: 98107220.0
(22) Anmeldetag: 21.04.1998
(51) Int. Cl.: F02F 1/42, F02B 31/06

(54) **Zylinderkopf**
Cylinder head
Culasse

(43) Veröffentlichungstag der Anmeldung: 03.11.1999
(73) Patentinhaber: Ford Global Technologies, Inc., A subsidiary of Ford Motor Company, Dearborn, Michigan 48126 (US)
(72) Erfinder: Ladell, Godwin, 50767 Köln (DE); Krzykowski, Heinrich Z., 58313 Herdecke (DE); Kraemer, Matthias, 51427 Bergisch-Gladbach (DE); Phlips, Patrick, 50858 Köln (DE)
(74) Vertreter: Drömer, Hans-Carsten, Dipl.-Ing.

(56) Entgegenhaltungen:
- US-A- 4 760 821
- US-A- 4 958 604
- US-A- 5 724 927
- US-A- 5 727 521

## Beschreibung

Die Erfindung betrifft einen Zylinderkopf zur Aufnahme von mehreren Einlaßventilen je Zylinder. Insbesondere soll der Zylinderkopf bei Ottomotoren verwendet werden, in denen eine Direkteinspritzung zum Teil in Verbindung mit einer Magerverbrennung durchgeführt werden soll.

Aus EP 0 66 409 A1 ist ein Zylinderkopf bekannt, bei dem pro Zylinder zwei Einlaßventile vorgesehen sind. Die Kraftstoffeinspritzung erfolgt mit einer Einspritzdüse, deren Einspritzöffnung etwa mittig zwischen einem Einlaßventilsitz und einem Auslaßventilsitz angeordnet ist.

Besonders für Verbrennungskraftmaschinen mit kleinen Zylinderbohrungen ist die Anordnung der Einlaß- und Auslaßkanäle sowie der Äufnähme der Ventile, Einspritzdüse und der Zündkerze ein Problem.

Nach US 5,724,927 ist vorgesehen, an einem Zylinderkopf mit Einlaßkanälen, die im Bereich der Einlaßventilsitze kreisförmig ausgebildet sind, den Sitz (die Durchführung) für das Einspritzventil von den Mittelpunkten der Einlaßventilsitze nach. außen versetzt anzuordnen. Damit liegt die Auslaßöffnung des Einspritzventiles nicht mehr auf dem Radius des Kreises, der durch die Mittelpunkte der kreisförmigen Einlaßventilsitze geht, sondern auf einem Radius der größer ist. Der Vorteil hiervon ist, daß die kreisförmigen Einlaßventilsitze näher zusammengerückt bzw. trotz der relativ kleinen Zylinderbohrung ausreichend groß gestaltet werden können.

Nach der bevorzugten Ausführung weisen die getrennten Einlaßkanäle, ausgehend von dem kreisförmigen Einlaßventilsitz, nach einem Übergangsbereich einen von der Kreisform abweichenden, insbesondere länglichen Querschnitt auf. Hierdurch kann die Einlaß-Strömung optimiert werden, insbesondere um zu vermeiden, daß die Zylinderwand bei früher Einspritzung mit Kraftstofftröpfchen benetzt wird.

Weiterhin wird hierdurch eine Positionierung der Einspritzdüse teilweise zwischen den Kanälen ermöglicht, so daß die Kanalführung und die Ausrichtung der Einspritzdüse weitgehend unabhängig voneinander sind.

Nach einer weiter bevorzugten Ausführung weisen die Mittelpunktslinien der Einlaßkanäle eines Zylinders im Bereich des länglichen Querschnittes einen größeren Abstand als im Bereich der Einlaßventilsitze auf. Hierdurch kann für die Aufnahme der Einspritzdüse mehr Platz geschaffen werden.

Nach US 4,958,604 kreuzt die Mittellinie der Einspritzdüse in ihrer horizontalen Projektion (siehe Fig. 2) die Mittellinie der Einlaßkanäle. Die Auslaßöffnung der Einspritzdüse liegt also unterhalb der Mittellinie der Einlaßkanäle, während die Aufnahmeöffnung für die Einspritzdüse an der Zylinderkopfaußenseite oberhalb der Öffnung für die Einlaßkanäle liegen kann. Bei im wesentlichen geradem Verlauf, der Einlaßkanäle im länglichen Bereich weist demzufolge die Mittellinie der Einspritzdüse zu der Zylinderkopfdichtfläche einen größeren Winkel auf als die Mittellinie der Einlaßkanäle im Bereich des länglichen Querschnittes. Insbesondere weist die Mittellinie der Einlaßdüse zur genannten Zylinderkopfoberfläche einen Winkel von etwa 45° auf. Im Hinblick auf die Ausrichtung von Einlaßkanal, Einspritzdüse und eines Ventiles ist die Einspritzdüse etwa in der Winkel halbierenden zwischen Einlaßventil und Einlaßkanal angeordnet.

Hierdurch wird eine große Flexibilität zur Optimierung der Ladungsbewegung und der Gemischbildung im Brennraum erzielt.

Nach einer weiter bevorzugten Ausführung ist vorgesehen, daß wenigstens in einem der Einlaßkanäle eine Einrichtung zur variablen Beeinflussung der Einlaßströmung (z.B. zur Erzeugung einer Drall- bzw. Tumble-Strömung) angeordnet ist.

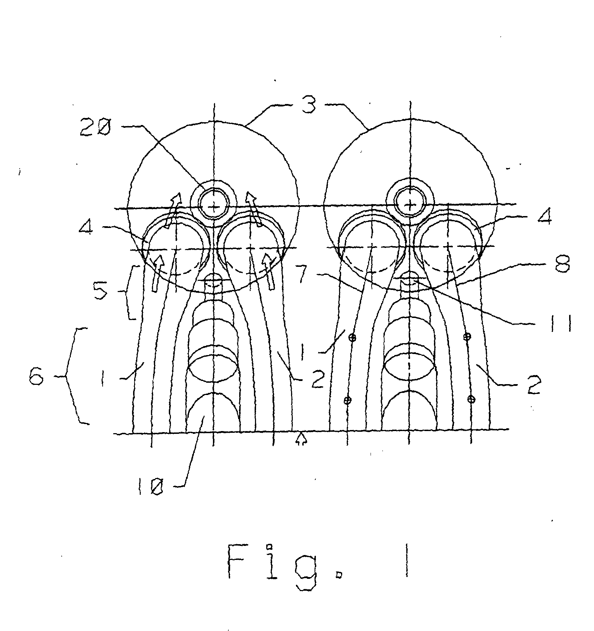

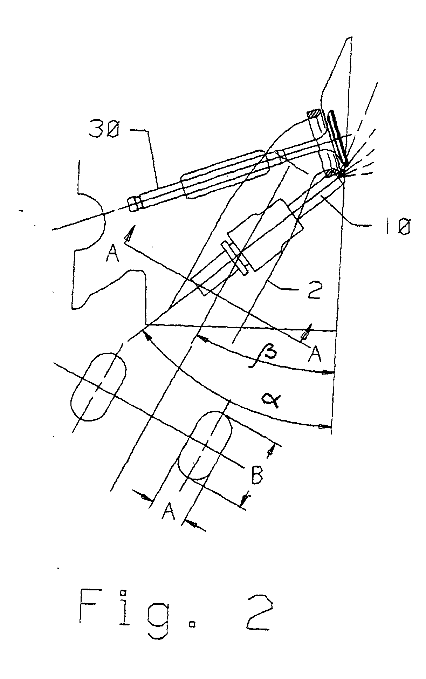

Anhand der Fig. 1 und 2 wird die Erfindung näher erläutert.
- Fig. 1: zeigt eine Draufsicht auf einen Abschnitt des Zylinderkopfes mit zwei Zylinderbohrungen.
- Fig. 2: zeigt eine Seitenansicht (horizontale Projektion) eines Ausschnittes des Zylinderkopfes für einen Zylinder.

Die in Fig. 1 dargestellten Einlaßkanäle 1, 2 für die Zylinderbohrungen 3 weisen im Bereich der Einlaßventilsitze 4 einen kreisförmigen Querschnitt auf. Dieser geht nach einem Übergangsbereich 5 in einen Abschnitt 6 über, in dem der Querschnitt der Einlaßkanäle länglich ausgebildet ist (siehe Fig. 2 Abmessungen A, B). Die Mittelpunktslinien 7, 8 der Einlaßkanäle weisen im Bereich des länglichen Abschnittes 6 mit länglichem Querschnitt einen größeren Abstand auf als im Bereich der Einlaßventilsitze 4. Die Aufnahme für die Einspritzdüse 10 ist zwischen den Einlaßkanälen 1, 2 so angeordnet, daß die Austrittsöffnung 11 für die Einspritzdüse auf einem Radius (bezogen auf die Zylinderbohrung) liegt, der größer ist als der Radius des Kreises der durch die Mittelpunkte der Einlaßventilsitze geht. Die Bohrung 20 für die Zündkerze ist etwas außermittig angeordnet.

Gemäß der Darstellung in Fig. 2 kreuzt die horizontale Projektion der Einspritzdüsen-Mittellinie die Mittellinie des Einlaßkanales. Die Einspritzdüse 10 ist unter einem Winkel a angeordnet, der größer ist als der Winkel β, bezogen auf die Ebene des Zylinderkopfes, die dem Brennraum zugewandt ist. Bezüglich der Lage eines Einlaßventiles ist die Einspritzdüse etwa in der Winkel halbierenden zwischen Einlaßventil 30 und Einlaßkanal 1, 2 angeordnet.

## Patentansprüche

1. Zylinderkopf mit Einlaßkanälen (1,2), die im Bereich der Einlaßventilsitze (4) kreisförmig ausgebildet sind,
wobei
- die Einlaßöffnung (11) für die Einspritzdüse (10) von den Mittelpunkten der Einlaßventilsitze (4) nach außen versetzt angeordnet is und
- die horizontale Projektion der Einspritzdüsenachse die Mittellinie der Einlaßkanäle (1,2) kreuzt
**dadurch gekennzeichnet, daß**
- die getrennten (1, 2) Einlaßkanäle, ausgehend von dem kreisförmigen Querschnitt an den Einlaßventilsitzen (4), nach einem Übergangsbereich in einen länglichen Querschnitt übergehen.

2. Zylinderkopf nach Anspruch 1,
**dadurch gekennzeichnet, daß**
- der Abstand der Mittelpunktslinien (7,8) der Einlaßkanäle (1,2) im Bereich des länglichen Querschnittes größer ist als im Bereich der Einfaßventilsitze (4).

## Claims

1. Cylinder head having inlet ducts (1, 2) which are of circular configuration in the region of the inlet-valve seats (4),
- the inlet opening (11) for the injection nozzle (10) being arranged in a manner offset outwardly from the centre points of the inlet-valve seats (4), and
- the horizontal projection of the injection-nozzle axis crossing the centre line of the inlet ducts (1, 2),
**characterized in that**
- the separate inlet ducts (1, 2), starting from the circular cross section at the inlet-valve seats (4), merge into an elongate cross section after a transitional region.

2. Cylinder head according to Claim 1, **characterized in that**
- the distance between the centre point lines (7, 8) of the inlet ducts (1, 2) is greater in the region of the elongate cross section than in the region of the inlet-valve seats (4).

## Revendications

1. Culasse comprenant des conduits d'admission (1, 2) qui sont réalisés sous forme circulaire dans la région des sièges de soupape d'admission (4),
dans laquelle
- l'ouverture d'admission (11) pour l'injecteur (10) est disposée de manière décalée vers l'extérieur par rapport aux centres des sièges de soupape d'admission (4) et
- la projection horizontale de l'axe de l'injecteur croise la ligne médiane des conduits d'admission (1, 2),
**caractérisée en ce que**
- les conduits d'admission séparés (1, 2), partant de la section transversale circulaire sur les sièges de soupape d'admission (4), passent après une zone de transition à une section transversale longitudinale.

2. Culasse selon la revendication 1,
**caractérisée en ce que**
- la distance des lignes médianes (7, 8) des conduits d'admission (1, 2) dans la région de la section transversale longitudinale est plus grande que dans la région des sièges de soupape d'admission (4).
